# EUROPEAN PATENT SPECIFICATION

(11) **EP 1 215 242 B1**
(45) Date of publication and mention of the grant of the patent: **31.03.2010**
(21) Application number: 01128347.0
(22) Date of filing: 30.11.2001
(51) Int. Cl.: C08L 23/22, C08L 23/28

(54) **Process for the preparation of a rubber composition for an inner liner**
Verfahren zur Herstellung einer Gummimischung für Innenschichten von Fahrzeugluftreifen
Procédé pour la preparation de une mélange de caoutchouc pour revêtement interne de pneumatiques

(30) Priority: 12.12.2000 EP 00126551
(43) Date of publication of application: 19.06.2002
(73) Proprietor: LANXESS Deutschland GmbH, 51369 Leverkusen (DE)
(72) Inventor: Langstein, Gerhard, Dr., 51515 Kürten (DE); Bohnenpoll, Martin, Dr., 51375 Leverkusen (DE); Sumner, Anthony, 51061 Köln (DE); Verhelst, Marc, 2900 Schoten (BE)

(56) References cited:
- EP-A- 0 556 965
- EP-A- 0 818 476
- DE-B- 1 180 123
- US-A- 3 099 644
- US-A- 4 039 506
- US-A- 4 288 575
- US-A- 5 434 212
- US-A- 5 883 207

## Description

### TECHNICAL FIELD

The present invention relates to the process of preparation of a rubber composition for an inner liner, and more particularly, to a rubber composition for an inner liner of a tubeless tire.

### BACKGROUND ART

It is known that there are usually two types of tire structures for maintaining the inner pressure of an air-containing tire, that is, a structure composed of a tire and a tube not integrated with the tire, and a tubeless structure where a tire itself functions as a container for air.

Needless to say, the role of tube is to prevent the escape of air, so that not only air tightness at a joint of a tube and a valve, but also gas permeability of wall of the tube itself (inversely, air tightness) is an important factor.

The gas permeability is an inherent property of the polymer used. Practically speaking, there is not any polymer better than butyl rubber (isobutylene-isoprene rubber, IIR). Even at present, tubes are usually produced by using IIR as a main component.

"Inner liner" is a material adhered to the inside surface of a tire so as to maintain air tightness and to replace the tube. In the early days, natural rubber and SBR were used as inner liners, but when they are used for a long period of time, air having permeated the liner also permeates the carcass and thereby various problems occur concerning durability.

However, as it is known, it is difficult to adhere a good airtight butyl rubber to natural rubber and the like, and therefore, butyl rubber can not be easily used as an inner liner. In order to overcome the problem, a modified butyl rubber, that is, a halogenated butyl rubber has been used. This polymer has a gas permeability substantially similar to that of butyl rubber, and moreover, can be adhered to natural rubber and SBR. Therefore, the halogenated butyl rubber is one of the best materials as an inner liner for tubeless tires.

Since retention of the inner pressure is an important role for air-containing tires used as passenger car tires, truck and bus tires and bicycle tires, a rubber composition comprising a halogenated butyl rubber as a main component is generally disposed on the inside of the tire as an inner liner layer so as to maintain the inner pressure.

Butyl rubber is a copolymer of an isoolefin and one or more multiolefins as comonomers. Commercial butyl comprise a major portion of isoolefin and a minor amount, not more than 2.5 wt%, of a multiolefin. The preferred isoolefin is isobutylene.

Suitable multiolefins include isoprene, butadiene, dimethyl butadiene, piperylene, etc. of which isoprene is preferred.

Halogenated butyl rubber is butyl rubber which has Cl and/or Br-groups.

Butyl rubber is generally prepared in a slurry process using methyl chloride as a vehicle and a Friedel-Crafts catalyst as the polymerization initiator. The methyl chloride offers the advantage that AlCl₃ a relatively inexpensive Friedel-Crafts catalyst is soluble in it, as are the isobutylene and isoprene comonomers. Additionally, the butyl rubber polymer is insoluble in the methyl chloride and precipitates out of solution as fine particles. The polymerization is generally carried out at temperatures of about -90°C to -100°C. See U.S. Patent No. 2,356,128 and Ullmanns Encyclopedia of Industrial Chemistry, volume A 23, 1993, pages 288-295.

The low polymerization temperatures are required in order to achieve molecular weights which are sufficiently high for rubber applications.

However, a higher degree of unsaturation would be desirable for more efficient crosslinking with other, highly unsaturated diene rubbers (BR, NR or SBR) present in the tire and therefore improving the performance of the halogenated or non-halogenated copolymers in the inner liner composition.

Raising the reaction temperature or increasing the quantity of isoprene in the monomer feed results in more poor polymer properties, in particular, in lower molecular weights. The molecular weight depressing effect of multiolefin comonomers may, in principle, be offset by still lower reaction temperatures. However, in this case the secondary reactions, which result in gelation occur to a greater extent. Gelation at reaction temperatures of around -120°C and possible options for the reduction thereof have been described (*c.f*. W.A. Thaler, D.J. Buckley Sr., Meeting of the Rubber Division, ACS, Cleveland, Ohio, May 6-9, 1975, published in Rubber Chemistry & Technology 49, 960-966 (1976)). The auxiliary solvents such as CS₂ required for this purpose are not only difficult to handle, but must also be used at relatively high concentrations which disturbs the performance of the resulting butyl rubber in the inner liner.

It is known from EP-A1-818 476 to use a vanadium initiator system at relatively low temperatures and in the presence of an isoprene concentration which is slightly higher than conventional (approx. 2 mol% in the feed), but, as with AlCl₃-catalyzed copolymerization at -120°C, in the presence of isoprene concentrations of >2.5 mol% this results in gelation even at temperatures of-70°C.

Halogenated butyls are well known in the art, and possess outstanding properties such as oil and ozone resistance and improved impermeability to air. Commercial halobutyl rubber is a halogenated copolymer of isobutylene and up to about 2.5 wt% of isoprene. As higher amounts of isoprene lead to gelation and/or too low molecular weight of the regular butyl being the starting material for halogenated butyl, no gel-free, halogenated butyls with comonomer contents of greater than 2.5 mol%, a molecular weight M_{w} of greater than 240 kg/mol and a gel content of less than 1.2 wt.% are known.

US-A-4288575 and US-A-4039506 disclose rubbers prepared by dehydrohalogenation DE-A-1180123 discloses a blend of butyl rubber and halogenated butyl rubber US-A-5883207 discloses rubbers prepared by copolymerisation of cyclopentadiene and isobutene.

### SUMMARY OF THE INVENTION

The object of the present invention is to provide a process for the preparation of a rubber composition for an inner liner, and particularly to a rubber composition for an inner liner of a tubeless tire, characterized in that said rubber composition comprises a low-gel, high molecular weight isoolefin isoprene copolymer with an isoprene content of greater than 2.5 mol%, a molecular weight M_{w} of greater than 240 kg/mol and a gel content of less than 1.2 wt.%, wherein a low-gel, high molecular weight isoolefin isoprene copolymer with an isoprene content of greater than 2.5 mol%, a molecular weight Mw of greater than 240 kg/mol and a gel content of less than 1.2 wt.% is mixed with one or more compounds selected from the group consisting of rubber, filler, vulcanizing agent, cumarone resin, additives, characterized in that said low-gel, high molecular weight isoolefin isoprene copolymer is produced in a process comprising the following step:
a) polymerizing at least one isoolefin, isoprene and optionally further monomers in presence of a catalyst and a organic nitro compound.

### DETAILED DESCRIPTION OF THE INVENTION

With respect to the monomers polymerized to yield the copolymer used in the composition, the expression isoolefin in this invention is preferably used for isoolefins with 4 to 16 carbon atoms of which isobutene is preferred.

As multiolefin Isoprene is used.

As optional monomers every monomer copolymerizable with the isoolefins and/or dienes known by the skilled in the art can be used. Chlorostyrene, styrene, alphamethyl styrene, various alkyl styrenes including p-methylstyrene, p-methoxy styrene, 1-vinylnaphthalene, 2-vinyl naphthalene, 4-vinyl toluene are preferably used.

The multiolefin content is greater than 2.5 mol%, preferably greater than 3.5 mol%, more preferably greater than 5 mol%, even more preferably greater than 7 mol%.

The molecular weight M_{w} is greater than 240 kg/mol, preferably greater than 300 kg/mol, more preferably greater than 350 kg/mol, even more preferably greater than 400 kg/mol.

The gel content is less than 1.2 wt.%, preferably less than 1 wt%, more preferably less than 0.8 wt%, even more preferably less than 0.7 wt%.

The polymerization is performed in the presence of an organic nitro compound and a catalyst/initiator selected from the group consisting of vanadium compounds, zirconium halogenid, hafnium halogenides, mixtures of two or three thereof, and mixtures of one, two or three thereof with AlCl₃, and from AlCl₃ deriveable catalyst systems, diethylaluminum chloride, ethylaluminum chloride, titanium tetrachloride, stannous tetrachloride, boron trifluoride, boron trichloride, or methylalumoxane.

The polymerization is preferably performed in a suitable solvent, such as chloroalkanes, in such a manner that
- in case of vanadium catalysis the catalyst only comes into contact with the nitroorganic compound in the presence of the monomer
- in case of zirconium/hafnium catalysis the catalyst only comes into contact with the nitroorganic compound in the absence of the monomer.

The nitro compounds used in this process are widely known and generally available. The nitro compounds preferably used according to the invention are disclosed in copending DE 100 42 118.0 which is incorporated by reference herein and are defined by the general formula (I)

R-NO₂ (I)

wherein R is selected from the group H, C₁-C₁₈ alkyl, C₃-C₁₈ cycloalkyl or C₆-C₂₄ cycloaryl.

C₁-C₁₈ alkyl is taken to mean any linear or branched alkyl residues with 1 to 18 C atoms known to the person skilled in the art, such as methyl, ethyl, n-propyl, i-propyl, n-butyl, i-butyl, t-butyl, n-pentyl, i-pentyl, neopentyl, hexyl and further homologues, which may themselves in turn be substituted, such as benzyl. Substituents, which may be considered in this connection, are in particular alkyl or alkoxy and cycloalkyl or aryl, such benzoyl, trimethylphenyl, ethylphenyl. Methyl, ethyl and benzyl are preferred.

C₆-C₂₄ aryl means any mono- or polycyclic aryl residues with 6 to 24 C atoms known to the person skilled in the art, such as phenyl, naphthyl, anthracenyl, phenanthracenyl and fluorenyl, which may themselves in turn be substituted. Substituents which may in particular be considered in this connection are alkyl or alkoxyl, and cycloalkyl or aryl, such as toloyl and methylfluorenyl. Phenyl is preferred.

C₃-C₁₈ cycloalkyl means any mono- or polycyclic cycloalkyl residues with 3 to 18 C atoms, such as cyclopropyl, cyclobutyl, cyclopentyl, cyclohexyl, cycloheptyl, cyclooctyl and further homologues, which may themselves, in turn, be substituted. Substituents which may, in particular, be considered in this connection are alkyl or alkoxy, and cycloalkyl or aryl, such as benzoyl, trimethylphenyl, ethylphenyl. Cyclohexyl and cyclopentyl are preferred.

The concentration of the organic nitro compound in the reaction medium is preferably in the range from 1 to 15000 ppm, more preferably in the range from 5 to 500 ppm. The ratio of nitro compound to vanadium is preferably of the order of 1000:1, more preferably of the order of 100:1 and most preferably in the range from 10:1 to 1:1. The ratio of nitro compound to zirconium/hafnium is preferably of the order of 100 : 1, more preferably of the order of 25: 1 and most preferably in the range from 14 : 1 to 1 : 1.

The monomers are generally polymerized cationically at temperatures in the range from -120°C to +20°C, preferably in the range from -100°C to -20°C, and pressures in the range from 0.1 to 4 bar.

Inert solvents or diluents known to the person skilled in the art for butyl polymerization may be considered as the solvents or diluents (reaction medium). These comprise alkanes, chloroalkanes, cycloalkanes or aromatics, which are frequently also mono- or polysubstituted with halogens. Hexane/chloroalkane mixtures, methyl chloride, dichloromethane or the mixtures thereof may be mentioned in particular. Chloroalkanes are preferably used in the process according to the present invention.

Suitable vanadium compounds are known to the person skilled in the art from EP-A1-818 476 which is incorporated by reference herein. Vanadium chloride is preferably used. This may advantageously be used in the form of a solution in an anhydrous and oxygen-free alkane or chloroalkane or a mixture of the two with a vanadium concentration of below 10 wt.%. It may be advantageous to store (age) the V solution at room temperature or below for a few minutes up to 1000 hours before it is used. It may be advantageous to perform this aging with exposure to light.

Suitable zirconium halogenids and hafnium halogenids are disclosed in DE 100 42 118.0 which is incorporated by reference herein. Preferred are zirconium dichloride, zirconium trichloride, zirconium tetrachloride, zirconium oxidichloride, zirconium tetrafluoride, zirconium tetrabromide, and zirconium tetraiodide, hafnium dichloride, hafnium trichloride, hafnium oxidichloride, hafnium tetrafluoride, hafnium tetrabromide, hafnium tetraiodide, and hafnium tetrachloride. Less suitable are in general zirconium and/or hafnium halogenides with sterically demanding substituents, e.g. zirconocene dichloride or bis(methylcyclopentadienyle)zirconium dichchloride. Preferred is zirconium tetrachloride.

Zirconium halogenids and hafnium halogenids are advantageously used as a solution in a water- and oxygen free alkan or chloroalkan or a mixture thereof in presence of the organic nitro compounds in a zirconium/hafnium concentration below of 4 wt.%. It can be advantageous to store said solutions at room temperature or below for a period of several minutes up to 1000 hours (aging), before using them. It can be advantageous to store them under the influence of light.

Polymerization may be performed both continuously and discontinuously. In the case of continuous operation, the process is preferably performed with the following three feed streams:
I) solvent/diluent + isoolefin (preferably isobutene)
II) multiolefin (preferably diene, isoprene) (+ organic nitro compound in case of vanadium catalysis)
III) catalyst (+ organic nitro compound in case of zirconium/hafnium catalysis)

In the case of discontinuous operation, the process may, for example, be performed as follows:

The reactor, precooled to the reaction temperature, is charged with solvent or diluent, the monomers and, in case of vanadium catalysis, with the nitro compound. The initiator, in case of zirconium/hafnium catalysis together with the nitro compound, is then pumped in the form of a dilute solution in such a manner that the heat of polymerization may be dissipated without problem. The course of the reaction may be monitored by means of the evolution of heat.

All operations are performed under protective gas. Once polymerization is complete, the reaction is terminated with a phenolic antioxidant, such as, for example, 2,2'-methylenebis(4-methyl-6-tert.-butylphenol), dissolved in ethanol.

Using the process above, it is possible to produce high molecular weight isoolefin copolymers having elevated double bond contents and simultaneously low gel contents. The double bond content is determined by proton resonance spectroscopy.

This process provides isoolefin copolymers with a comonomer content of greater than 2.5 mol%, a molecular weight M_{w} of greater than 240 kg/mol and a gel content of less than 1.2 wt.% which are useful in the preparation of the inventive compound.

In another aspect, these copolymers are the starting material for the halogenation process which yields the halogenated copolymers also useful for the preparation of the inventive compound.

Halogenated copolymers have a higher inner pressure retaining property than other diene rubbers, but the anti-shrinking property is poorer, and therefore, when the compounding ratio of halogenated butyl rubbers is increased so as to enhance the inner pressure retaining effect, the degree of shrinkage also increases accordingly. However, this drawback can be suppressed remarkably by addition of resins and a careful selection of filler with a low BET surface.

Halogenated isoolefin rubber, especially butyl rubber, may be prepared using relatively facile ionic reactions by contacting the polymer, preferably dissolved in organic solvent, with a halogen source, e.g., molecular bromine or chlorine, and heating the mixture to a temperature ranging from about 20 °C to 90 °C for a period of time sufficient for the addition of free halogen in the reaction mixture onto the polymer backbone.

Another continuous method is the following: Cold butyl rubber slurry in chloroalkan (preferably methyl chloride) from the polymerization reactor in passed to an agitated solution in drum containing liquid hexane. Hot hexane vapors are introduced to flash overhead the alkyl chloride diluent and unreacted monomers. Dissolution of the fine slurry particles occurs rapidly. The resulting solution in stripped to remove traces of alkyl chloride and monomers, and brought to the desired concentration for halogenation by flash concentration. Hexane recovered from the Flash concentration step is condensed and returned to the solution drum. In the halogenation process butyl rubber in solution is contacted with chlorine or bromine in a series of high-intensity mixing stages. Hydrochloric or hydrobromic acid is generated during the halogenation step and must be neutralized. For a detailed description of the halogenation process see U.S. Patent Nos. 3,029,191 and 2,940,960, as well as U.S. Patent No. 3,099,644 which describes a continuous chlorination process, EP-A1-0 803 518 or EP-A1-0 709 401, all of which patents are incorporated herein by reference.

Another process suitable in this invention is disclosed in EP-A1-0 803 518 in which an improved process for the bromination of a C₄-C₆ isoolefin-C₄-C₆ conjugated diolefin polymer which comprises preparing a solution of said polymer in a solvent, adding to said solution bromine and reacting said bromine with said polymer at a temperature of from 10°C to 60°C and separating the brominated isoolefin-conjugated diolefin polymer, the amount of bromine being from 0.30 to 1.0 moles per mole of conjugated diolefin in said polymer, characterized in that said solvent comprises an inert halogen-containing hydrocarbon, said halogen-containing hydrocarbon comprising a C₂ to C₆ paraffinic hydrocarbon or a halogenated aromatic hydrocarbon and that the solvent further contains up to 20 volume per cent of water or up to 20 volume per cent of an aqueous solution of an oxidizing agent that is soluble in water and suitable to oxidize the hydrogen bromide to bromine in the process substantially without oxidizing the polymeric chain is disclosed which is for U.S. patent practice also included by reference.

The skilled in the art will be aware of many more suitable halogenation processes but a further enumeration of suitable halogenation processes is not deemed helpful for further promoting the understanding of the present invention.

Preferably the bromine content is in the range of from 4 - 30 wt.%, even more preferably 6 - 17 , particularly preferable 6-12.5 and the chlorine content is preferably in the range of from 2 - 15 wt.%, even more preferably 3-8, particularly preferable 3-6.

It is in the understanding of the skilled in the art that either bromine or chlorine or a mixture of both can be present.

A typical inner liner composition is composed of 100-60 parts by weight of a halogenated copolymer (normally halobutyl, preferably bromobutyl) and 0-40 parts by weight of the non-halogenated copolymer (regular butyl) and/or a diene rubber.

However, the higher unsaturation level of the inventive copolymers allow to substitute the more expensive halobutyl totally or at least partially by the non-halogenated copolymer.

Preferably the rubber part of the rubber composition is fully composed of one or more non-halogenated low-gel, high molecular weight isoolefin multiolefin copolymer with a multiolefin content of greater than 2.5 mol%, a molecular weight M_{w} of greater than 240 kg/mol and a gel content of less than 1.2 wt.% or contains 80 parts by weight or more of one or more of said non-halogenated copolymers. It might be advantageous to blend said non-halogenated isoolefin copolymers with one or more isoolefin multiolefin copolymer, preferably those halogenated isoolefin copolymers with a comonomer content of greater than 2.5 mol%, a molecular weight M_{w} of greater than 240 kg/mol and a gel content of less than 1.2 wt.%.

Preferred diene synthetic rubbers that might be also present in the inventive composition are disclosed in I. Franta, Elastomers and Rubber Compounding Materials, Elsevier, Amsterdam 1989 and comprise
- BR: Polybutadiene
- ABR: Butadiene/Acrylic acid-C₁-C₄-alkylester-Copolymers
- CR: Polychloroprene
- IR: Polyisoprene
- SBR: Styrol/Butadiene-Copolymerisates with Styrolcontents in the range of 1 to 60, preferably 20 to 50 wt.-%
- NBR: Butadiene/Acrylonitrile-Copolmers with Acrylonitrilcontents of 5 to 60,
preferably 10 to 40 wt.-%
- HNBR: partially or totally hydrogenated NBR-rubber
- EPDM: Ethylene/Propylene/Diene-Copolymerisates
- FKM: fluoropolymers or fluororubbers and mixtures of the given polymers.

Preferably the composition furthermore comprises in the range of 0.1 to 20 parts by weight of an organic fatty acid, preferably a unsaturated fatty acid having one, two or more carbon double bonds in the molecule which more preferably includes 10% by weight or more of a conjugated diene acid having at least one conjugated carbon-carbon double bond in its molecule.

Preferably those fatty acids have in the range of from 8- 22 carbon atoms, more preferably 12-18. Examples include stearic acid, palmic acid and oleic acid and their calcium-, magnesium-, potassium- and ammonium salts.

Preferably the composition furthermore comprises 20 to 140, more preferably 40 to 80 parts by weight per hundred parts by weight rubber (=phr) of an active or inactive filler.

The filler may be composed of
- highly disperse silicas, prepared e.g. by the precipitation of silicate solutions or the flame hydrolysis of silicon halides, with specific surface areas of 5 to 1000, and with primary particle sizes of 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas of 20 to 400 m²/g and primary particle diameters of 10 to 400 nm;
- natural silicates, such as kaolin and other naturally occurring silica;
- glass fibres and glass fibre products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have preferably BET (DIN 66 131) specific surface areas of 20 to 200 m²/g, e.g. SAF, ISAF, HAF, SRF, FEF or GPF carbon blacks;
- rubber gels, especially those based on polybutadiene, butadiene/styrene copolymers, butadiene/acrylonitrile copolymers and polychloroprene;
or mixtures thereof.

Examples of preferred mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the butyl elastomer. For many purposes, the preferred mineral is silica, especially silica made by carbon dioxide precipitation of sodium silicate.

Dried amorphous silica particles suitable for use in accordance with the invention may have a mean agglomerate particle size between 1 and 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover has a BET surface area, measured in accordance with DIN (Deutsche Industrie Norm) 66131, of between 50 and 450 square meters per gram and a DBP absorption, as measured in accordance with DIN 53601, of between 150 and 400 grams per 100 grams of silica, and a drying loss, as measured according to DIN ISO 787/11, of from 0 to 10 percent by weight. Suitable silica fillers are available under the trademarks HiSil 210, HiSil 233 and HiSil 243 from PPG Industries Inc. Also suitable are Vulkasil S and Vulkasil N, from Bayer AG.

It might be advantageous to use a combination of carbon black and mineral filler in the inventive compound. In this combination the ratio of mineral fillers to carbon black is usually in the range of from 0.05 to 20, preferably 0.1 to 10.

For the rubber composition of the present invention it is usually advantageous to contain carbon black in an amount of 20 to 140 parts by weight, preferably 45 to 80 parts by weight, more preferably 48 to 70 parts by weight.

For improvement of anti-shrinkage properties coumarone resin may be advantageously used. Coumarone resin may be called coumarone-indene resin, and is a general term for thermoplastic resins composed of mixed polymers of aromatic unsaturated compounds such as indene, coumarone, styrene and the like which are mainly contained in coal tar series solvent naphtha. Coumarone resins having a softening point of 60°C- 120 °C are preferably used.

The amount of coumarone resin compounded with a rubber composition for an inner liner is usually 0-25 parts by weight, preferably 5-20 parts by weight per 100 parts by weight of a rubber composition composed of natural rubber or an ordinary synthetic rubber alone, or a blend of natural rubber with polyisoprene rubber, polybutadiene rubber and the like.

The amount of coumarone resin compounded with a rubber composition composed of 100-60 parts by weight of inventive halogenated copolymers and 0-40 parts by weight of diene rubbers is preferably 0-20 parts by weight, more preferably 5-16 parts by weight per 100 parts by weight of the above-mentioned rubber composition.

The rubber blends according to the invention optionally contain crosslinking agents as well. Crosslinking agents which can be used are sulfur or peroxides, sulfur being particularly preferred. The sulphur curing can be effected in known manner. See, for instance, chapter 2, "The Compounding and Vulcanization of Rubber", of "Rubber Technology", 3^{rd} edition, published by Chapman & Hall, 1995.

The rubber composition is mixed with one or more compounds selected from the group consisting of rubber, filler, vulcanizing agent, coumarone resin and additive.

The higher unsaturation of the isoolefin copolymer allows for the use of nitrosamine free additives. These additives are nitrosamine free themselves and do not lead to nitrosamine formation during or after the vulcanization. 2-Mercaptobenzothiazole (MBT) and/or Dibenzothiazyldisulfide are preferably used.

The rubber composition according to the invention can contain further auxiliary products for rubbers, such as reaction accelerators, vulcanizing accelerators, vulcanizing acceleration auxiliaries, antioxidants, foaming agents, antiageing agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry.

The rubber aids are used in conventional amounts, which depend inter alia on the intended use. Conventional amounts are e.g. from 0.1 to 50 wt.%, based on rubber.

The rubber/rubbers, and optional one or more components selected from the group consisting of filler/fillers, one or more vulcanizing agents, silanes and further additives, are mixed together, suitably at an elevated temperature that may range from 30°C to 200°C. It is preferred that the temperature is greater than 60°C, and a temperature in the range 90 to 130°C is particularly preferred. Normally the mixing time does not exceed one hour and a time in the range from 2 to 30 minutes is usually adequate. The mixing is suitably carried out in an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder.

The vulcanization of the compounds is usually effected at temperatures in the range of 100 to 200°C, preferred 130 to 180°C (optionally under pressure in the range of 10 to 200 bar).

For compounding and vulcanization see also: Encyclopedia of Polymer Science and Engineering, Vol. 4, S. 66 et seq. (Compounding) and Vol. 17, S. 666 et seq. (Vulcanization).

The following Examples are provided to illustrate the present invention:

### EXAMPLES

### Experimental details

Gel contents were determined in toluene after a dissolution time of 24 hours at 30°C with a sample concentration of 12.5 g/l. Insoluble fractions were separated by ultra-centrifugation (1 hour at 20000 revolutions per minute and 25°C).

The solution viscosity η of the soluble fractions was determined by Ubbelohde capillary viscosimetry in toluene at 30°C. **The molecular mass Mᵥ** was calculated according to the following formula: In (Mᵥ) = 12,48 + 1,565 * In η.

GPC analysis was performed by a combination of four, 30 cm long columns from the company Polymer Laboratories (PL-Mixed A). The internal diameter of the columns was 0.75 cm). Injection volume was 100 µl. Elution with THF was performed at 0.8 ml/min. Detection was performed with a UV detector (260 nm) and a refractometer. Evaluation was performed using the Mark-Houwink relationship for polyisobutylene (dn/dc = 0.114; α = 0.6; K = 0.05).

Mooney-Viscosity was measured at 125 °C with a total time of 8 minutes (ML 1+8 125 °C).

The concentrations of the monomers in the polymer and the **"branching point"¹** were detected by NMR.
¹ J.L. White, T.D. Shaffer, C.J. Ruff, J.P. Cross: Macromolecules (1995) 28, 3290

**Isobutene** (Fa. Gerling+Holz, Deutschland, Qualität 2.8) was purified by purging through a column filled with sodium on aluminum oxide (Na-content 10 %).
**Isoprene** (Fa. Acros, 99%) was purified by purging through a column filled with dried aluminum oxide, and destilled under argon over calcium hydride. The water content was 25 ppm.
**Methyl chloride** (Fa. Linde, Qualität 2.8) was purified by purging through a column filled with active carbon black and another column with Sicapent.
**Methylene chloride** (Fa. Merck, Qualität: Zur Analyse ACS, ISO) was destilled under argon over phosphorous pentoxide.
**Hexane** was purified by destillation under argon over calcium hydride.
**Nitromethane** (Fa. Aldrich, 96 %) was stirred for 2 hours over phosphorous pentoxid, during this stirring argon was purged through the mixture. Then the nitromethane was destilled in vacuo (about 20 mbar).
**Vanadium tetrachloride** (Fa. Aldrich) was filtered through a glass filter under an argon atmosphere prior to use.

### Example 1

300 g (5.35 mole) of isobutene were initially introduced together with 700 g of methyl chloride and 27.4 g (0.4 mole) of isoprene at -90°C under an argon atmosphere and with exclusion of light. 0.61 g (9.99 mmole) of nitromethane was added to the monomer solution before the beginning of the reaction. A solution of vanadium tetrachloride in hexane (concentration: 0.62 g of vanadium tetrachloride in 25 ml of n-hexane) was slowly added dropwise (duration of feed approx. 15-20 minutes) to this mixture until the reaction started (detectable by an increase in the temperature of the reaction solution).

After a reaction time of approx. 10-15 minutes, the exothermic reaction was terminated by adding a precooled solution of 1 g of 2,2'-methylenebis(4-methyl-6-tert.-butylphenol) (Vulkanox BKF from Bayer AG, Leverkusen) in 250 ml of ethanol. Once the liquid had been decanted off, the precipitated polymer was washed with 2.5 1 of ethanol, rolled out into a thin sheet and dried for one day under a vacuum at 50°C.

8.4 gr. of polymer were isolated. The copolymer had a intrinsic viscosity of 1.28 dl/g, a gel content of 0.8 wt.%, an isoprene content of 4.7 mole%, a Mₙ of 126 kg/mole, a M_{w} of 412.1 kg/mole, and a swelling index in toluene at 25 °C of 59.8.

### Example 2

100 g of the polymer of example 1 are cut into pieces of 0.5 * 0.5 * 0.5 cm and were swollen in a 2-1 Glasflask in the dark for 12 hours at roomtemperature in 933 ml (615 g) of hexane (50 % n-Hexane, 50 % mixture of isomeres). Then the mixture was heated to 45 °C and stirred for 3 hours in the dark.

To this mixture 20 ml of water were added. Under vigorous agitation at 45 °C a solution of 17 g of bromine (0,106 mol) in 411 ml (271 g) of hexane was added in the dark. After 30 seconds the reaction was stopped by addition of 187,5 ml of aqueous 1 N NaOH. The mixture was stirred vigorously for 10 minutes. The yellow color of the mixture faded and turned into a milky white color.

After separation of the aqueous phase the mixture was washed 3 times with 500 ml of destilled water. The mixture was then poured into boiling water and the rubber coagulated. The coagulat was dried at 105 °C on a rubber mill. As soon as the rubber got clear 2 g of calcium stearate as stabilizer were added. (For analytical data see table 1). The nomenclature used in the microstuctural analysis is state of the art. However, it can also be found in CA-2,282,900 in Fig.3 and throughout the whole specification.

**Table 1**

| | |
|---|---|
| Yield | 98 % |
| Bromine content | 6,5 % |

| Mikro structure acc. to NMR (in mole%) | |
|---|---|
| 1,4 Isoprene | 0,11 |
| 1,2 Isoprene | 0,11 |
| Exomethylene | 2,32 |
| Products of rearrangements | 0,59 |
| Conjugated double bonds in Endo-structure | 0,16 |
| Double bonds in Endo-structure | 0,11 |
| **total** | **3,40** |

### Example 3

110.15 g (1.96 mole) of isobutene were initially introduced together with 700 g of methyl chloride and 14.85 g (0.22 mole) of isoprene at -95°C under an argon atmosphere. A solution of 0.728 g (3.12 mmole) zirkonium tetrachloride and 2.495 g (40.87 mmole) of nitromethane in 25 ml of methylene chloride was slowly added dropwise within 30 minutes to this mixture.

After a reaction time of approx. 60 minutes, the exothermic reaction was terminated by adding a precooled solution of 1 g of Irganox 1010 (Ciba) in 250 ml of ethanol. Once the liquid had been decanted off, the precipitated polymer was washed with 2.5 l of acetone, rolled out into a thin sheet and dried for one day under a vacuum at 50°C.

47.3 g of polymer were isolated. The copolymer had a intrinsic viscosity of 1.418 dl/g, a gel content of 0.4 wt.%, an isoprene content of 5.7 mole%, a Mₙ of 818.7 kg/mole, a M_{w} of 2696 kg/mole, and a swelling index in toluene at 25 °C of 88.2.

### Example 4:

100 g of the polymer of example 3 are cut into pieces of 0.5 * 0.5 * 0.5 cm and were swollen in a 2-1 Glasflask in the dark for 12 hours at room temperature in 933 ml (615 g) of hexane (50 % n-Hexane, 50 % mixture of isomeres). Then the mixture was heated to 45 °C and stirred for 3 hours in the dark.

To this mixture 20 ml of water were added. Under vigorous agitation at 45 °C a solution of 17 g of bromine (0,106 mol) in 411 ml (271 g) of hexane was added in the dark. After 30 seconds the reaction was stopped by addition of 187,5 ml of aqueous 1 N NaOH. The mixture was stirred vigorously for 10 minutes. The yellow color of the mixture faded and turned into a milky white color.

After separation of the aqueous phase the mixture was washed 1 time with 500 ml of destilled water. The mixture was then poured into boiling water and the rubber coagulated. The coagulat was dried at 105 °C on a rubber mill. As soon as the rubber got clear 2 g of calcium stearate as stabilizer were added. (For analytical data see table 1). The nomenclature used in the microstuctural analysis is state of the art.

However, it can also be found in CA-2,282,900 in Fig.3 and throughout the whole specification.

**Table 2**

| | |
|---|---|
| Yield | 96 % |
| Bromine content | 6.9% |

### Example 5:

Of the product of Example 2 a typical tyre inner liner compound was prepared and vulcanized.

As comparative example a comparable compound was prepared of POLYSAR Bromobutyl ® 2030 available from Bayer Inc., Canada. The components are given in parts by weight.

Vulkacit® DM and MBT are mercapto accelerators available from Bayer AG, D.
Sunpar 2280 is a paraffinic oil available from Sunoco Inc.
Pentalyn A is a thermoplastic resin available from Hercules Inc.

| Example | 5a | 5b | 5c |
|---|---|---|---|
| compounds Brabender mixed at 150°C, curatives were added on the mill at 50 °C. | | | |
| Example 2 | 100 | | |
| Example 1 | | | 100 |
| Bromobutyl® 2030 | | 100 | |
| N 660 Carbon Black | 60 | 60 | 60 |
| Sunpar 2280 | 7 | 7 | 7 |
| ZnO RS | 3 | 3 | 3 |
| Stearic Acid | 1 | 1 | 1 |
| Pentalyn A | 4 | 4 | 4 |
| Sulphur | 0.5 | 0.5 | 2 |
| Vulkacit® MBT | | | 2 |
| Vulkacit® DM | 1.3 | 1.3 | |

### Compound PROPERTIES

| **CURED PROPERTIES** | 5a | 5b | 5c |
|---|---|---|---|
| on Monsanto Rheometer MDR 2000 @ 165 °C | | | |
| MIN DIN 53529 | 1.0 | 1.5 | 1.2 |
| Ts1 DIN 53529 | 0.7 | 2.1 | 4.0 |
| T50 DIN 53529 | 0.9 | 2.9 | 9.2 |
| T90 DIN 53529 | 5.6 | 5.8 | 22.4 |
| MH DIN 53529 | 8.6 | 5.9 | 6.3 |

5b is a standard inner liner compound. When a high unsaturation and high bromine bromobutyl replaces the standard bromobutyl, the compound is very fast with a higher maximum torque (5a).

If a non-brominated high unsaturation butyl is used (5c), the same properties are achieved but the compound need more accelerator to achieve the same cure speed.

## Claims

1. Process for the preparation of a rubber composition for a tire inner liner, wherein said rubber composition comprises a low-gel, high molecular weight isoolefin isoprene copolymer with an isoprene content of greater than 2.5 mol%, a molecular weight M_{w} of greater than 240 kg/mol and a gel content of less than 1.2 wt.%, wherein a low-gel, high molecular weight isoolefin isoprene copolymer with an isoprene content of greater than 2.5 mol%, a molecular weight Mw of greater than 240 kg/mol and a gel content of less than 1.2 wt.% is mixed with one or more compounds selected from the group consisting of rubber, filler, vulcanizing agent, cumarone resin, additives, **characterized in that** said low-gel, high molecular weight isoolefin isoprene copolymer is produced in a process comprising the following step:
a) polymerizing at least one isoolefin, isoprene and optionally further monomers in presence of a catalyst and a organic nitro compound

2. The process according to claim 1, additionally comprising the step:
b) contacting the resulting copolymer under halogenation conditions with at least one halogenating agent.

3. A process according to Claim 1 or 2, wherein said organic nitro compound is of the general formula (I)
R-NO₂ (I)
wherein R represents H, C₁-C₁₈ alkyl, C₃-C₁₈ cycloalkyl or C₆-C₂₄ cycloaryl.

4. A process according to any of Claims 1 to 3, wherein the concentration of said organic nitro compound in the reaction medium is in the range from 1 to 1000 ppm.

5. A process according to any of Claims 1 to 4, wherein said catalyst is selected from the group consisting of vanadium compounds, zirconium halogenids, hafnium halogenides, mixtures of two or three thereof, and mixtures of one, two or three thereof with AlCl₃ and from AlCl₃ deriveable catalyst systems, diethylaluminum chloride, ethylaluminum chloride, titanium tetrachloride, stannous tetrachloride, boron trichloride, or methylalumoxane.

6. A process according to any one of Claims 1 to 5, wherein the further monomers are selected from chlorostyrene, styrene, alpha methyl styrene, alkyl styrenes, p-methyl styrene, p-methoxy styrene, 1-vinyl naphthalene, 2-vinyl naphthalene and 4-vinyl toluene.

## Patentansprüche

1. Verfahren zur Herstellung einer Kautschukzusammensetzung für eine Reifeninnenisolierung, wobei die Kautschukzusammensetzung ein gelarmes, hochmolekulares Isoolefin-Isopren-Copolymer mit einem Isoprengehalt von mehr als 2,5 Mol-%, einem Molekulargewicht M_{w} von mehr als 240 kg/mol und einem Gelgehalt von weniger als 1,2 Gew.-% umfaß, bei dem man ein gelarmes, hochmolekulares Isoolefin-Isopren-Copolymer mit einem Isoprengehalt von mehr als 2,5 Mol-%, einem Molekulargewicht M_{w} von mehr als 240 kg/mol und einem Gelgehalt von weniger als 1,2 Gew.-% mit einer oder mehreren Verbindungen aus der Gruppe bestehend aus Kautschuk, Füllstoff, Vulkanisierungsmittel, Cumaronharz und Additiven mischt, **dadurch gekennzeichnet, daß** man das gelarme, hochmolekulare Isoolefin-Isopren-Copolymer bei einem Verfahren mit dem folgenden Schritt herstellt:
a) Polymerisation von mindestens einem Isoolefin, Isopren und gegebenenfalls weiteren Monomeren in Gegenwart eines Katalysators und einer organischen Nitroverbindung.

2. Verfahren nach Anspruch 1, zusätzlich mit dem Schritt:
b) Inberührungbringen des erhaltenen Copolymers mit mindestens einem Halogenierungsmittel unter Halogenierungsbedingungen.

3. Verfahren nach Anspruch 1 oder 2, bei dem die organische Nitroverbindung die allgemeine Formel (I)
R-NO₂ (I)
worin R für H, C₁-C₁₈-Alkyl, C₃-C₁₈-Cycloalkyl oder C₆-C₂₄-Cycloaryl steht, aufweist.

4. Verfahren nach einem der Ansprüche 1 bis 3, bei dem die Konzentration der organischen Nitroverbindung im Reaktionsmedium im Bereich von 1 bis 1000 ppm liegt.

5. Verfahren nach einem der Ansprüche 1 bis 4, bei dem man den Katalysator aus der Gruppe bestehend aus Vanadiumverbindungen, Zirconiumhalogeniden, Hafniumhalogeniden, Mischungen von zwei oder drei dieser Verbindungen und Mischungen von einer, zwei oder drei dieser Verbindungen mit AlCl₃ und unter von AlCl₃ ableitbaren Katalysatorsystemen, Diethylaluminiumchlorid, Ethylaluminiumchlorid, Titantetrachlorid, Zinntetrachlorid, Bortrichlorid oder Methylalumoxan auswählt.

6. Verfahren nach einem der Ansprüche 1 bis 5, bei dem man die weiteren Monomere unter Chlorstyrol, Styrol, alpha-Methylstyrol, Alkylstyrolen, p-Methylstyrol, p-Methoxystyrol, 1-Vinylnaphthalin, 2-Vinylnaphthalin und 4-Vinyltoluol auswählt.

## Revendications

1. Procédé de préparation d'une composition de caoutchouc pour une chambre à air de pneumatique, dans lequel ladite composition de caoutchouc comprend un copolymère d'isooléfine et d'isoprène de masse moléculaire élevée, à faible teneur en gel, ayant une teneur en isoprène supérieure à 2,5% en moles, une masse moléculaire Mw supérieure à 240 kg/mole et une teneur en gel inférieure à 1,2% en poids, dans lequel un copolymère d'isooléfine et d'isoprène de masse moléculaire élevée, à faible teneur en gel, ayant une teneur en isoprène supérieure à 2,5% en moles, une masse moléculaire Mw supérieure à 240 kg/mole et une teneur en gel inférieure à 1,2% en poids est mélangé avec un ou plusieurs composés choisis dans le groupe constitué par un caoutchouc, une charge, un agent de vulcanisation, une résine de coumarone, des additifs, **caractérisé en ce que** ledit copolymère d'isooléfine et d'isoprène de masse moléculaire élevée, à faible teneur en gel, est produit par un procédé comprenant l'étape suivants :
a) polymérisation d'au moins une isooléfine, d'isoprène et éventuellement d'autres monomères en présence d'un catalyseur et d'un composé nitro organique.

2. Procédé selon la revendication 1, comprenant en outre l'étape suivants :
b) mise en contact du copolymère ainsi obtenu dans des conditions d'halogénation avec au moins un agent d'halogénation.

3. Procédé selon la revendication 1 ou 2, dans lequel ledit composé nitro organique a pour formule générale (I)
R-NO₂ (I)
dans laquelle R représente H ou un groupe alkyle en C₁-C₁₈, cycloalkyle en C₃-C₁₈ ou cycloaryle en C₆-C₂₄.

4. Procédé selon l'une quelconque des revendications 1 à 3, dans lequel la concentration dudit composé nitro organique dans le milieu réactionnel est sur la plage de 1 à 1000 ppm.

5. Procédé selon l'une quelconque des revendications 1 à 4, dans lequel ledit catalyseur est choisi dans le groupe constitué par les composés du vanadium, les halogénures de zirconium, les halogénures d'hafnium, les mélanges de deux ou de trois de ces composés, et les mélanges d'un, de deux ou de trois de ces composés avec AlCl₃ et parmi les systèmes de catalyseur pouvant être dérivés de AlCl₃, le chlorure de diéthylaluminum, le chlorure d'éthylaluminum, le tétrachlorure de titane, le tétrachlorure stanneux, le trichlorure de bore ou le méthylalumoxane.

6. Procédé selon l'une quelconque des revendications 1 à 5, dans lequel les autres monomères sont choisis parmi le chlorostyrène, le styrène, l'alpha-méthylstyrène, les alkylstyrènes, le p-méthylstyrène, le p-méthoxystyrène, le 1-vinylnaphtalène, le 2-vinylnaphtalène et le 4-vinyltoluène.
